# EUROPÄISCHE PATENTSCHRIFT

(11) **EP 1 198 371 B1**
(45) Veröffentlichungstag und Bekanntmachung des Hinweises auf die Patenterteilung: **15.03.2006**
(21) Anmeldenummer: 00963876.8
(22) Anmeldetag: 07.08.2000
(51) Int. Cl.: B60R 21/20

(54) **AIRBAGVORRICHTUNG**
AIRBAG DEVICE
DISPOSITIF D'AIRBAG

(30) Priorität: 05.08.1999 DE 29913628 U
(43) Veröffentlichungstag der Anmeldung: 24.04.2002
(73) Patentinhaber: Volkswagen Aktiengesellschaft, 38436 Wolfsburg (DE)
(72) Erfinder: MÜLLER, Olaf, 65428 Rüsselsheim (DE)
(74) Vertreter: Lindner, Manfred Klaus
(86) Internationale Anmeldenummer: PCT/DE2000/002625
(87) Internationale Veröffentlichungsnummer: WO 2001/010684

(56) Entgegenhaltungen:
- DE-A- 19 726 878
- DE-A- 19 733 896
- DE-A- 19 750 182
- DE-A- 19 855 657
- DE-U- 29 721 643

## Beschreibung

Die Erfindung betrifft eine Airbagvorrichtung.

Die auf den vorliegenden Anmelder/Inhaber zurückgehenden älteren deutschen Patentanmeldungen 197 12 782.7, 197 26 878.1 und 197 33 896.8, europäische Patentanmeldung 98 10 55 51.0, internationale Patentanmeldung PCT/DE 99/01564 sowie Gebrauchsmusteranmeldungen 298 08 317.5, 298 09 554.8, 298 19 165.2, 298 20 722.2, 299 05 000.9, 299 05 919.7, 299 07 102.2, 299 08 946.0 und 299 10 059.6 befassen sich allgemein mit einer Airbagvorrichtung sowie einem Auslöseverfahren dafür. Die vorliegende Erfindung betrifft Verbesserungen sämtlicher in der früheren Anmeldung behandelten Techniken und Ausführungsbeispiele insbesondere hinsichtlich der Bauart der Airbagvorrichtung und Auslösesteuerung und im speziellen eine Ausgestaltung zur Steuerung einer Airbagklappe. Insofern ist der vollständige Offenbarungsgehalt dieser älteren Anmeldungen insbesondere hinsichtlich der Bauart der Airbagvorrichtung und Auslösesteuerung und im speziellen eine Ausgestaltung zur Steuerung einer Airbagklappe hiermit durch die Bezugnahmen vollumfänglich in die vorliegenden Unterlagen aufgenommen.

Aus der DE 197 50 182 A1 ist eine Airbagvorrichtung mit wenigstens einer Abdeckeinrichtung bekannt, hinter der in einer Schließlage ein sich durch Gasfüllung ausbreitender Gassack untergebracht ist und die zum Freigeben der Ausbreitung des Gassackes mittels einer Steuerung aus der Schließlage in eine Offenlage bewegbar ist, wobei ein Gaserzeugungseinrichtungen zugeordneter verschiebbarer Drucktopf vorgesehen ist, durch dessen Bewegung mit mechanischen Hilfsmitteln, die Bestandteil der Steuerung sind, die Abdeckeinrichtung aus der Schließlage in die Offenlage bewegt wird.

In den Druckschriften DE 197 33 896 A1 und DE 197 26 878 A1 ist eine Airbagvorrichtung offenbart, bei der eine Airbagklappe an einen verschiebbaren Gasgenerator angeschlossen ist, bei dessen Bewegung die Airbagklappe so mitgenommen wird, dass sie hinter eine Armaturentafel gezogen wird, hinter der die Airbagvorrichtung angeordnet ist und aus der dann ein Gassack ungestört austreten kann.

Mit der vorliegenden Erfindung wird das Ziel angestrebt und erreicht, eine Airbagvorrichtung gemäß den vorstehend genannten älteren Anmeldungen weiter zu verbessern, und insbesondere den Platzbedarf zu verringern.

Dazu schafft die Erfindung eine Airbagvorrichtung nach dem Anspruch 1.

Vorzugsweise kann die Airbagvorrichtung als Airbagmodul ausgestaltet sein, das den Drucktopf, die mechanischen Hilfsmittel und die Abdeckeinrichtung enthält, und in das die Abdeckeinrichtung durch die Bewegung des Drucktopfes bei Auslösung der Airbagvorrichtung hineingezogen wird.

Eine andere Weiterbildung besteht darin, dass der Drucktopf Überströmöffnungen enthält, die nach dem Einziehen der Abdeckeinrichtung eine Gaszuleitung zum Gassack freigeben. Alternativ oder zusätzlich kann vorgesehen sein, dass das Modulgehäuse eine Führung für den Drucktopf bildet, und/oder dass das Gehäuse der Airbagvorrichtung, insbesondere ggf. das Modulgehäuse, mit zur Aufnahme der Beanspruchung durch den Gasdruck zum Verstellen des Drucktopfes und zum Füllen des Gassackes ausgelegt ist.

Ferner ist es bevorzugt, wenn zwischen dem Drucktopf und dem Gehäuse der Airbagvorrichtung, insbesondere ggf. dem Modulgehäuse, eine Gleitfolie zur leichten, vorzugsweise verklemmungsfreien Führung des Drucktopfes und/oder zur Abdichtung vorgesehen ist. Die Gleitfolie kann in Form und/oder Material derart ausgeführt sein, dass der Gasdruck und/oder die Gastemperatur zu einem "Abschmelzen" der Folie und insbesondere deren vorderer Lippe führt und damit eine solide plastische Dichtmasse entsteht.

Vorzugsweise weist das ggf. vorhandene Modulgehäuse ein offenes Ende auf, an dem es mit einem Gasgenerator zur Erzeugung des Gasdruckes zum Verstellen des Drucktopfes und zum Füllen des Gassackes abgedichtet verbunden ist. Bei Weiterbildungen davon ist vorgesehen, dass das Modulgehäuse an seinem offenen Ende mit dem Gasgenerator zu einer Einheit verbunden ist, und/oder dass das Modulgehäuse an seinem offenen Ende mit dem Gasgenerator durch Verclinchen, Verschrauben, Vernieten etc. verbunden ist.

Insbesondere im Zusammenhang mit der Modulbauweise ist es ferner von Vorteil, wenn das Gehäuse der Airbagvorrichtung, insbesondere ggf. das Modulgehäuse, derart ausgelegt ist, dass es als Aufnahmeträger für die die mechanischen Hilfsmittel dient, die insbesondere Umlenkrollen und Zugseile, Hebel oder entsprechende andere Übertragungsmittel enthalten. Alternativ oder zusätzlich kann vorgesehen sein, dass das Gehäuse der Airbagvorrichtung, insbesondere ggf. das Modulgehäuse, zur Aufnahme und/oder Befestigung des Gassackes, und/oder zur Befestigung oder Aufnahme eines Schußkanals und/ode einer Klappenführung und/oder -aufnahme ausgelegt ist. Weiterhin kann wenn das Gehäuse der Airbagvorrichtung, insbesondere ggf. das Modulgehäuse, insbesondere angeformte Laschen aufweisen, an/in denen die mechanischen Hilfsmittel, insbesondere darin enthaltene Zugseile, geführt sind, wobei vorzugsweise die Führung der Seile mit einem Dichtmittel, plastisch oder als Leiste, druckdicht verschlossen ist.

Weitere vorzugsweise und/oder vorteilhafte Ausgestaltungen der Erfindung ergeben sich aus den abhängigen Ansprüchen und deren Kombinationen sowie den gesamten vorliegenden Unterlagen. Dies gilt auch für Verfahren, die den entsprechenden Darstellungen der erfindungsgemäßen Vorrichtungen in den Ansprüchen und der Beschreibung sowie in den Zeichnungen in ggf. analoger Weise für den Fachmann ohne weiteres erkennbar zu entnehmen sind, nachdem dieser durch die vorliegenden Unterlagen Kenntnis über die Grundlagen und Prinzipien der vorliegenden Erfindung erlangt hat.

Anhand der nachfolgend beschriebenen und in den Zeichnungen dargestellten Ausführungs- und Anwendungsbeispiele wird die Erfindung näher erläutert. In der Zeichnung zeigen:
Fig. 1a, b und c in einer schematischen Längsschnittansicht eine Airbagvorrichtung in einer Ausführung gemäß der Erfindung,
Fig. 2a, b und c in einer schematischen Querschnittansicht eine Airbagvorrichtung in der Ausführung der Fig. 1a, b und c,
Fig. 3a, b und c je in einer schematischen Seiten und Querschnittansicht ein Modulgehäuse der Airbagvorrichtung in der Ausführung der Fig. 1a, b und c, und
Fig. 4a, b und c in einer vergrößerten schematischen Querschnittansicht eine Seilführung in dem Modulgehäuse der Fig. 3a, b und c.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

In den Figuren der Zeichnung sind folgende Teile mit den entsprechenden Bezugszeichen versehen:
- 1: Modulgehäuse
- 2: Drucktopf
- 3: Zündung der 1. Stufe
- 4: Zündung der 2. Stufe
- 5: Entsorgungszündung
- 6: Umlenkrolle
- 7: Seil
- 8: Bimetalltemperatursteuerung der 1. Stufe
- 9: Bimetalltemperatursteuerung der 2. Stufe
- 10: Entsorgung
- 11: Generator der 1. Stufe
- 12,: Generator der 2. Stufe
- 13: Verschiebezylinder
- 14: Kunststoffabdichtung
- 15: Gasdurchgangslöcher
- 16: Bagbefestigung
- 17: Seilführung
- 18: Gleit- und Abdichtfolie

Ohne Beschränkung wird die Erfindung anhand einer Beifahrer-Airbagvorrichtung, die als Airbagmodul mit rückziehbarem Airbagdeckel ausgestaltet ist, erläutert. Jedoch kann die Erfindung auch bei anderen Airbagvorrichtungen als Beifahrer-Airbagvorrichtungen mit Vorteil eingesetzt werden.

Im Rahmen der Erfindung wird insbesondere für die Airbagvorrichtung ein Basismodul mit Rundgehäuse geschaffen, das beispielsweise bei einer Airbagvorrichtung verwendet werden kann, wie sie in der europäischen Patentanmeldung 98 10 55 51.0 offenbart ist Die vorliegende Erfindung schafft insbesondere eine in der Praxis vorteilhafte Ausführung als Fertigungsalternative.

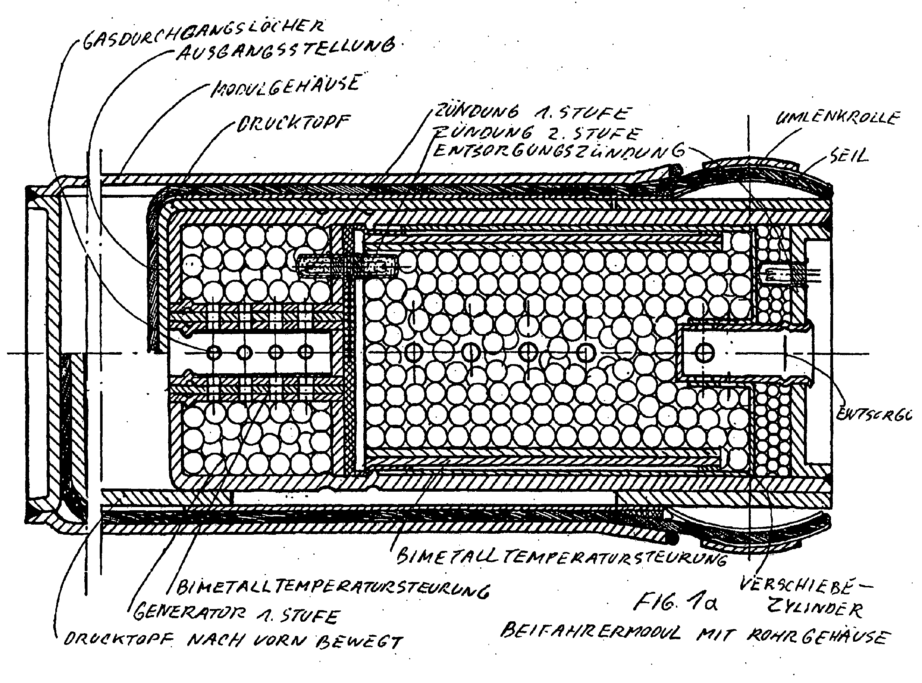

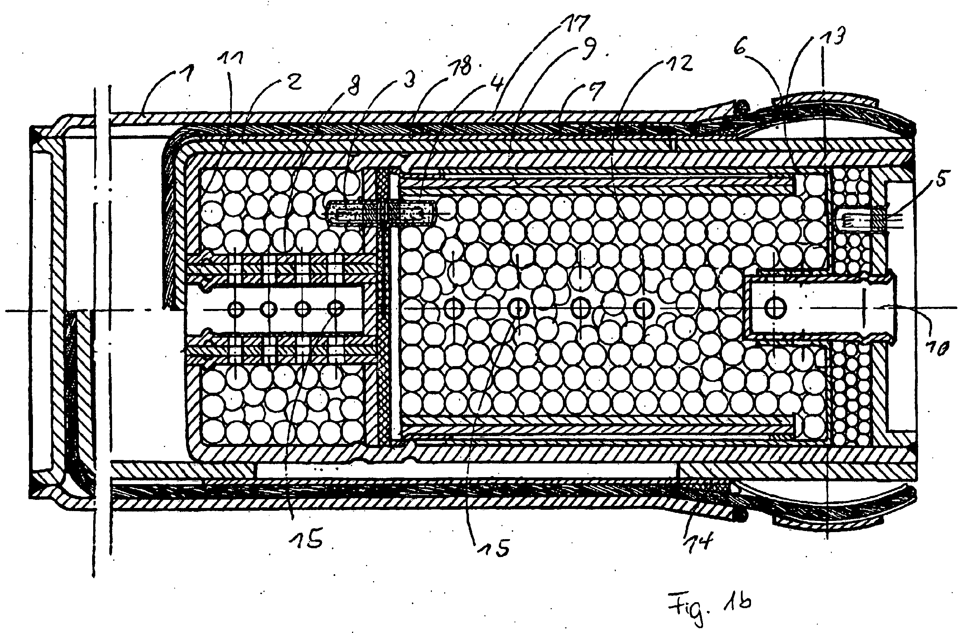

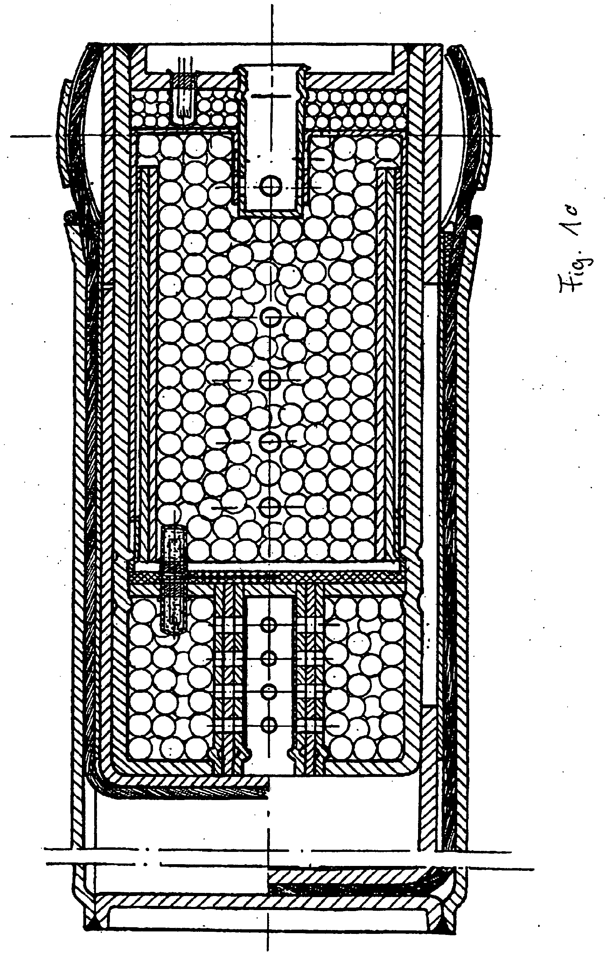

Die Fig. 1a, b und c zeigen im geschnittenen Zusammenbau einen Zweistufengenerator mit jeweils Bimetalltemperatursteuerung, wie sie beispielsweise in der deutschen Gebrauchsmusteranmeldung 299 08 946.0 offenbart ist, deren gesamter Inhalt insbesondere diesbezüglich hiermit hier aufgenommen ist.

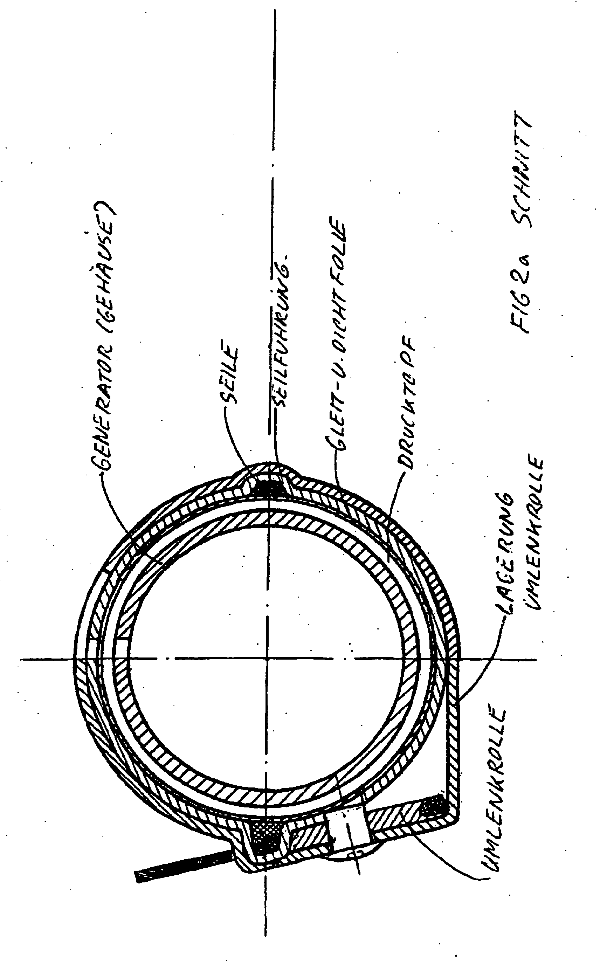

Die erste Stufe bläst über ein Innenrohr in den "Drucktopf". Wenn durch den Druck des Gases der Drucktopf weit genug vorgeschoben ist, öffnet er Gasdurchgangslöcher in der Außenwand, durch die der Gassack in der ersten Stufe gefüllt wird. Der Drucktopf zieht dabei gleichzeitig an zwei umgelenkten Seilen, die ihrerseits über Umlenkrollen (Fig. 2a, b und c) Airbagklappen nach innen ziehen.

Die zweite Stufe wird z.B. gezündet mit einer "Kordelsteuerung" für "out of position", wie in den älteren deutschen Patentanmeldungen 197 03 945.6, 197 09 257.8 und 197 15 463.8 sowie der deutschen Gebrauchsmusteranmeldungen 298 20 722.2 beschrieben ist, die durch die hiermit erfolgte Bezugnahme bezüglich dieser Technologie vollinhaltlich in den vorliegenden Unterlagen aufgenommen sind. Das Gas geht beispielsweise direkt über Gasdurchgangslöcher in den Airbag, vorzugsweise jedoch beeinflußt durch Bimetallbleche, die am Umfang installiert sind, z.B. gemäß der deutschen Gebrauchsmusteranmeldung 299 08 946.0. Wie in letzterer geschildert ist, verdrehen sich z.B. Zylinder, die an Bimetallspeichen gelagerte sind, und geben dadurch in ihrer Zylinderwand temperaturunabhängig Löcher mehr oder weniger frei, was zu mehr oder weniger Gasdurchfluß durch die Löcher führt.

Eine Entsorgungszündung, wie sie beispielsweise ebenfalls in der deutschen Gebrauchsmusteranmeldung 299 08 946.0 gezeigt ist und im Rahmen der letzteren durch die hiermit, vorgenommene Bezugnahme vollumfänglich in den vorliegenden Unterlagen aufgenommen ist, wird zeitversetzt zur zweiten Stufe gezündet, um bei einem evtl. Nichtzünden der zweiten Stufe den Generator von Sprengstoff zu befreien. Hierzu wird bevorzugt ein "Verschiebezylinder" durch Zündung von Sprengstoff derart verschoben, dass er die Durchströmlöcher des Gases zum Bag schließt und gleichzeitig entsprechende oder andere Leitungen bzw. Durchströmlöcher zur seitlichen Entsorgung öffnet.

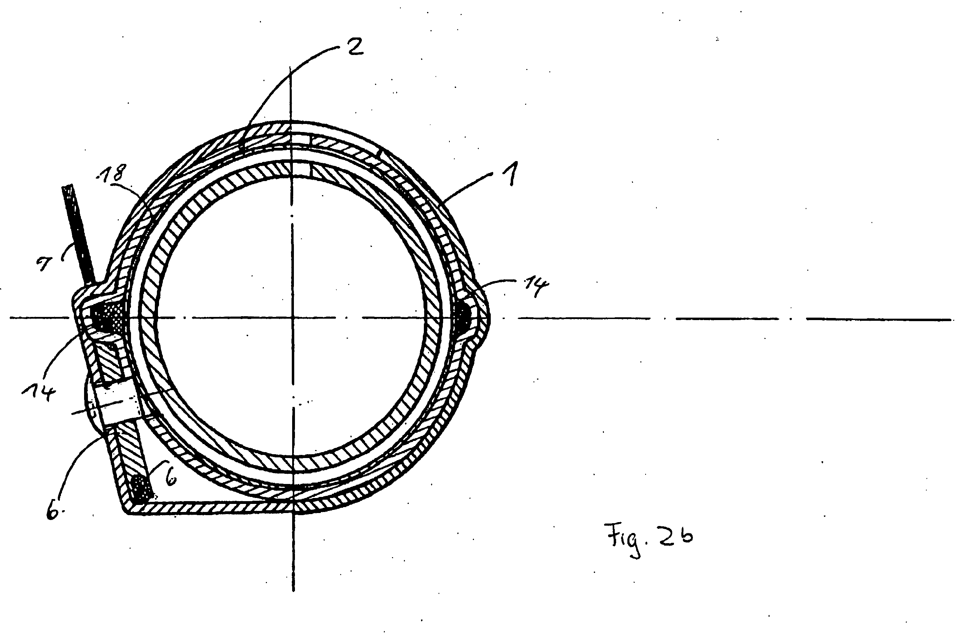

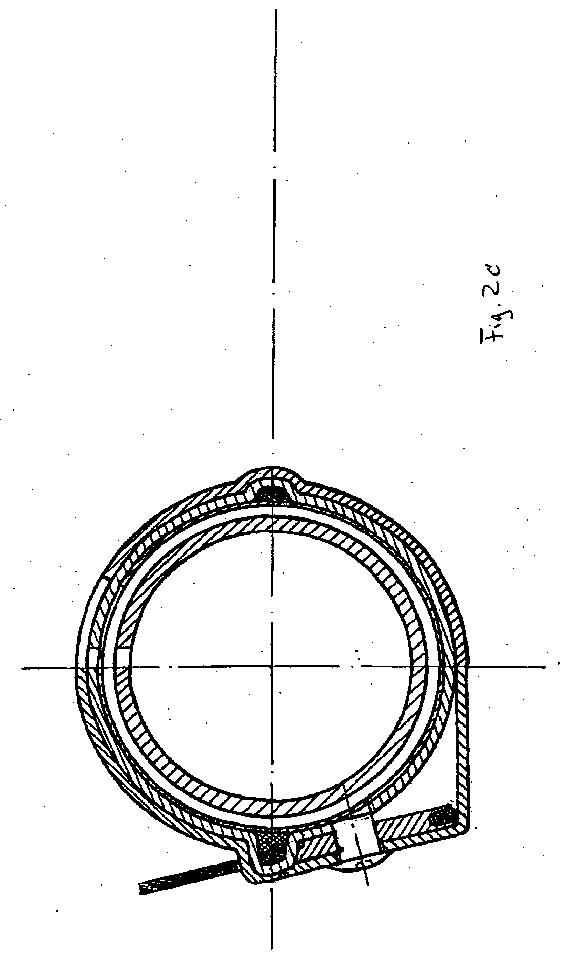

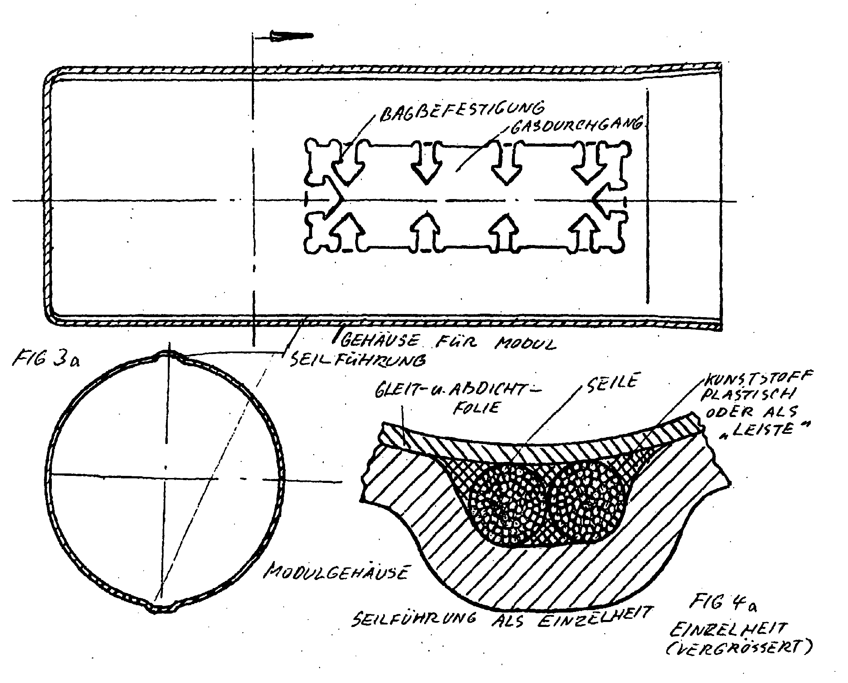

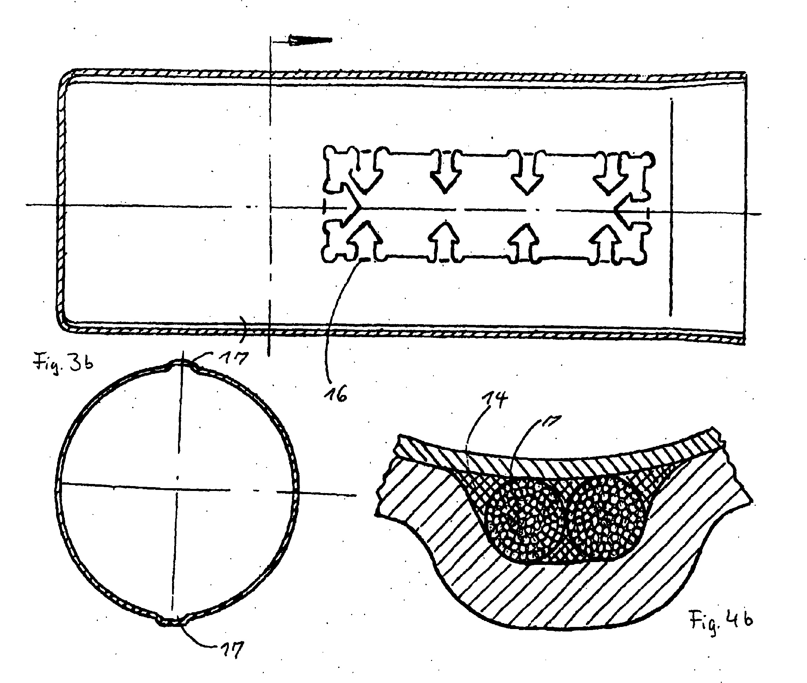

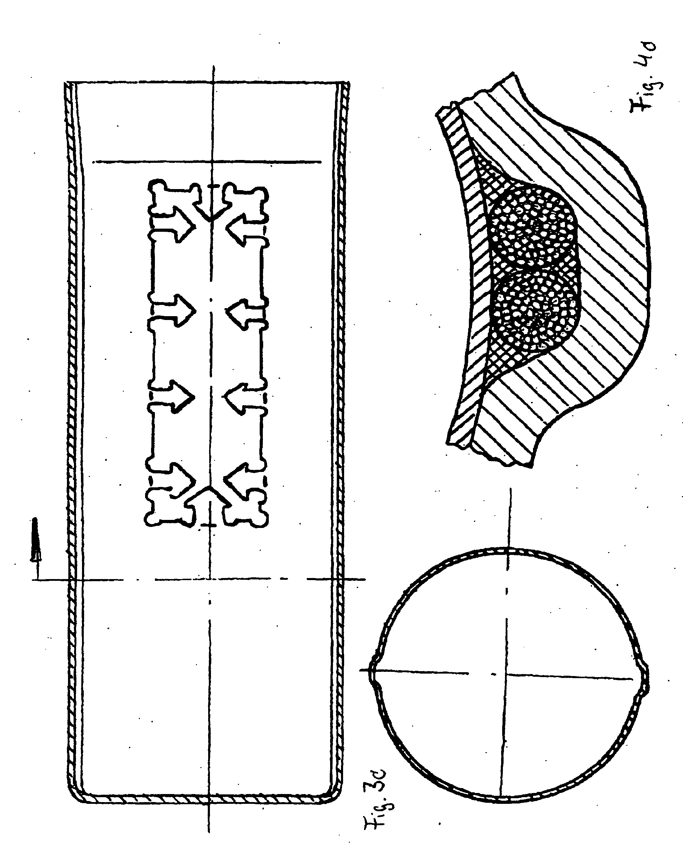

Neu ist die in der Praxis besonders vorteilhafte Führung der Druckwanne, nicht nur auf dem Generatorgehäuse, sondern gleichzeitig in einem äußeren Rohr, das gleichzeitig Modulgehäuse sein kann. Dieses Modulgehäuse ist derart ausgebildet, dass es eine Öffnung für den Gasdurchgang besitzt und der Airbag auch mittels angeformten Laschen an diesem Gehäuse befestigt werden kann (Fig. 3a, b und c). Falls in konkreten Einzelfällen eine Montage technisch einfacher ist, kann der Airbag ebenso an einem separaten Rohr entsprechend befestigt und aufgesteckt werden.

In dem Modulgehäuse ist vorzugsweise auch eine Seilführung beidseitig eingeprägt, die als vergrößerte Einzelansicht in den Fig. 4a, b und c gezeigt ist. Die Seilführung wird mit plastischem Material in Form von Paste oder Leisten gasdicht gemacht, falls dies erforderlich ist. Zwischen dem Drucktopf und dem Gehäuse kann außerdem eine Folie eingelegt werden. Sie dient als Gleitmittel und weitere Abdichtung und kann alternativ auch als alleinige Abdichtung der Seile dienen. Der Drucktopf ist mit dem Generator bevorzugt im hinteren Bereich vorzugsweise als eine Einheit verbunden. Je ein Paar der Umlenkrollen ist vorzugsweise in einem entsprechend gefertigten, um das Modul bzw. um den Generator gelegten Blechband gelagert. Dieses Grundmodul kann dann mittels Kopfaufschlagblechen, wie sie beispielsweise in den weiter oben angegebenen älteren Anmeldungen des vorliegenden Anmelders gezeigt sind, mit dem Gehäuse zur Bag- und Klappenführung verbunden sein

Die vorliegende Erfindung zeigt eine in der Praxis vorteilhafte, platzsparende und kostengünstige Ausführung einer Airbagvorrichtung anhand eines Beifahrer-Airbagmodules, das bei Auslösung mittels gasgetriebener Mechanik (Drucktopf) die Airbagklappen in das Modul zieht. Damit wird ein wesentlicher Beitrag zu einem nicht aggressiven Airbag geleistet. Das den Drucktopf formschlüssig umfassende Modulgehäuse kann gleichzeitig dessen Führung dienen und auch Last aufnehmen. Gleichzeitig ermöglicht diese Ausführung des Modulgehäuses eine "dichte" Seilführung zur Öffnung der Airbagklappen. Auch die Befestigung der Umlenkrollen kann als ein "aufschiebbarer", entsprechend ausgebildeter "Ring" gestaltet sein.

Die Erfindung ist anhand der Ausführungsbeispiele in der Beschreibung und in den Zeichnungen lediglich exemplarisch dargestellt und nicht darauf beschränkt, sondern umfaßt alle Variationen, Modifikationen, Substitutionen und Kombinationen, die im Rahmen der Ansprüche gedeckt sind.

## Patentansprüche

1. Airbagvorrichtung mit wenigstens einer Abdeckeinrichtung, hinter der in einer Schließlage ein sich durch Gasfüllung ausbreitender Gassack untergebracht ist und die zum Freigeben der Ausbreitung des Gassackes mittels einer Steuerung aus der Schließlage in eine Offenlage bewegbar ist,
wobei ein Gaserzeugungseinrichtungen (11, 12) zugeordneter verschiebbarer Drucktopf (2) vorgesehen ist, durch dessen Bewegung mit mechanischen Hilfsmitteln (6, 7, 17), die Bestandteil der Steuerung sind, die Abdeckeinrichtung aus der Schließlage in die Offenlage bewegt wird,
**dadurch gekennzeichnet,**
**dass** die Gaserzeugungseinrichtungen einen Gasgenerator (11) zum Erzeugen eines Gasdruckes zum Verstellen des auf dem Gasgenerator (11, 12) verschiebbar angeordneten Drucktopfes (2) und zum Füllen des Gassackes aufweisen,
**dass** Überströmöffnungen (15) enthalten sind, die nach dem Einziehen der Abdeckeinrichtungen eine Gaszuleitung aus dem Drucktopf (2) zum Gassack freigeben, und
**dass** das Gehäuse (1) der Airbagvorrichtung rohrförmig und mit dem Gasgenerator (11) verbunden ist und den Drucktopf (2) abgedichtet umgibt.

2. Airbagvorrichtung nach Anspruch 1, **dadurch gekennzeichnet, dass** die Airbagvorrichtung als Airbagmodul ausgestaltet ist, das den Drucktopf (2), die mechanischen Hilfsmittel (6, 7, 17) und die Abdeckeinrichtung enthält, und in das die Abdeckeinrichtung durch die Bewegung des Drucktopfes (2) bei Auslösung der Airbagvorrichtung hineingezogen wird.

3. Airbagvorrichtung nach Anspruch 1 oder 2, **dadurch gekennzeichnet,**
**dass** zwischen dem Drucktopf (2) und dem rohrförmigen Gehäuse (1) der Airbagvorrichtung eine Gleitfolie (18) zur leichten Führung des Drucktopfes (2) vorgesehen ist.

4. Airbagvorrichtung nach Anspruch 3, **dadurch gekennzeichnet**,
**dadurch gekennzeichnet,**
**dass** die Gleitfolie (18) zur verklemmungsfreien Führung des Drucktopfes (2) ausgelegt ist.

5. Airbagvorrichtung nach Anspruch 3 oder 4, **dadurch gekennzeichnet,**
**dass** die Gleitfolie (18) zur Abdichtung vorgesehen ist.

6. Airbagvorrichtung nach einem der Ansprüche 3 bis 5, **dadurch gekennzeichnet,**
**dass** die Gleitfolie (18) in Form und/oder Material derart ausgeführt ist, dass der Gasdruck und/oder die Gastemperatur zu einem "Abschmelzen" der Folie und insbesondere deren vorderer Lippe führt und dass damit eine solide plastische Dichtmasse entsteht.

7. Airbagvorrichtung nach einem der Ansprüche 3 bis 6, **dadurch gekennzeichnet,**
**dass** das Gehäuse der Airbagvorrichtung ein Modulgehäuse (1) ist, und dass die Gleitfolie (18) zwischen dem Drucktopf (2) und dem Modulgehäuse (1) vorgesehen ist.

8. Airbagvorrichtung nach einem der vorhergehenden Ansprüche,
**dadurch gekennzeichnet,**
**dass** das Gehäuse (1) der Airbagvorrichtung, insbesondere ggf. das Modulgehäuse, mit zur Aufnahme der Beanspruchung durch den Gasdruck zum Verstellen des Drucktopfes (2) und zum Füllen des Gassackes ausgelegt ist.

9. Airbagvorrichtung nach einem der vorhergehenden Ansprüche,
**dadurch gekennzeichnet,**
**dass** das Gehäuse (1) der Airbagvorrichtung, insbesondere ggf. das Modulgehäuse, ein offenes Ende aufweist, an dem es mit einem Gasgenerator (11, 12) zur Erzeugung des Gasdruckes zum Verstellen des Drucktopfes (2) und zum Füllen des Gassackes abgedichtet verbunden ist.

10. Airbagvorrichtung nach Anspruch 9, **dadurch gekennzeichnet, dass** das Gehäuse (1) der Airbagvorrichtung, insbesondere ggf. das Modulgehäuse, an seinem offenen Ende mit dem Gasgenerator (11, 12) zu einer Einheit verbunden ist.

11. Airbagvorrichtung nach Anspruch 9 oder 10, **dadurch gekennzeichnet,**
**dass** das Gehäuse (1) der Airbagvorrichtung, insbesondere ggf. das Modulgehäuse, an seinem offenen Ende mit dem Gasgenerator (11, 12) durch Verclinchen, Verschrauben, Vernieten etc. verbunden ist.

12. Airbagvorrichtung nach einem der vorhergehenden Ansprüche,
**dadurch gekennzeichnet,**
**dass** das Gehäuse (1) der Airbagvorrichtung, insbesondere ggf. das Modulgehäuse, derart ausgelegt ist, dass es als Aufnahmeträger für die die mechanischen Hilfsmittel dient, die insbesondere Umlenkrollen (6) und Zugseile (7), Hebel oder entsprechende andere Übertragungsmittel enthalten.

13. Airbagvorrichtung nach einem der vorhergehenden Ansprüche,
**dadurch gekennzeichnet;**
**dass** das Gehäuse (1) der Airbagvorrichtung, insbesondere ggf. das Modulgehäuse, zur Aufnahme und/oder Befestigung des Gassackes ausgelegt ist.

14. Airbagvorrichtung nach einem der vorhergehenden Ansprüche,
**dadurch gekennzeichnet,**
**dass** das Gehäuse (1) der Airbagvorrichtung, insbesondere ggf. das Modulgehäuse, zur Befestigung oder Aufnahme eines. Schusskanals und/oder einer Klappenführung und/oder -aufnahme ausgelegt ist.

15. Airbagvorrichtung nach einem der vorhergehenden Ansprüche,
**dadurch gekennzeichnet,**
**dass** das Gehäuse (1) der Airbagvorrichtung, insbesondere ggf. das Modulgehäuse, insbesondere angeformte Laschen aufweist, an/in denen die mechanischen Hilfsmittel, insbesondere darin enthaltene Zugseile (7), geführt sind.

16. Airbagvorrichtung nach Anspruch 15, **dadurch gekennzeichnet, dass** die Führung der Seile (7) mit einem Dichtmittel (14), plastisch oder als Leiste, druckdicht verschlossen ist.

17. Airbagvorrichtung nach einem der vorhergehenden Ansprüche,
**dadurch gekennzeichnet,**
**dass** das Gehäuse (1) der Airbagvorrichtung, insbesondere ggf. das Modulgehäuse, eine Führung für den Drucktopf (2) bildet.

18. Airbagvorrichtung nach einem der vorhergehenden Ansprüche,
**dadurch gekennzeichnet,**
**dass** die Überströmöffnungen (15), die nach dem Einziehen der Abdeckeinrichtungen eine Gaszuleitung zum Gassack freigeben, in dem Drucktopf (2) enthalten sind.

## Claims

1. Airbag device with at least one covering device, behind which, in a closed position, an airbag which unfurls by filling with gas is accommodated and which can be moved by means of a control system from a closed position into an open position in order to enable the unfurling of the airbag, with a displaceable pressure pad (2) being provided, which is assigned to gas-generating devices (11, 12) and by the movement of which, by means of mechanical auxiliary means (6, 7, 17), which are part of the control system, the covering device is moved from the closed position into the open position, **characterized in that** the gas-generating devices have a gas generator (11) to generate a gas pressure to displace the pressure pad (2), which is arranged displaceably on the gas generator (11, 12), and to fill the airbag, **in that** overflow openings (15) are included which, after the covering devices are retracted, open up a gas supply line from the pressure pad (2) to the airbag, and **in that** the housing (1) of the airbag device is tubular and is connected to the gas generator (11) and surrounds the pressure pad (2) in a sealed manner.

2. Airbag device according to Claim 1, **characterized in that** the airbag device is designed as an airbag module which contains the pressure pad (2), the mechanical auxiliary means (6, 7, 17) and the covering device, and into which the covering device is retracted by the movement of the pressure pad (2) when the airbag device is triggered.

3. Airbag device according to Claim 1 or 2, **characterized in that** a sliding film (18) for easy guidance of the pressure pad (2) is provided between the pressure pad (2) and the tubular housing (1) of the airbag device.

4. Airbag device according to Claim 3, **characterized in that** the sliding film (18) is designed for guidance of the pressure pad (2) in a manner free from jamming.

5. Airbag device according to Claim 3 or 4, **characterized in that** the sliding film (18) is provided for sealing.

6. Airbag device according to one of Claims 3 to 5, **characterized in that** the sliding film (18) is designed in shape and/or material in such a manner that the gas pressure and/or the gas temperature leads to a "melting" of the film and, in particular of the front lip thereof, and **in that** a solid, plastic sealing compound therefore arises.

7. Airbag device according to one of Claims 3 to 6, **characterized in that** the housing of the airbag device is a module housing (1), and **in that** the sliding film (18) is provided between the pressure pad (2) and the module housing (1).

8. Airbag device according to one of the preceding claims, **characterized in that** the housing (1) of the airbag device, in particular, if appropriate, the module housing, is designed at the same time for absorbing the stress caused by the gas pressure for displacing the pressure pad (2) and for filling the airbag.

9. Airbag device according to one of the preceding claims, **characterized in that** the housing (1) of the airbag device, in particular, if appropriate, the module housing, has an open end at which it is connected in a sealed manner to a gas generator (11, 12) for generating the gas pressure to displace the pressure pad (2) and to fill the airbag.

10. Airbag device according to Claim 9, **characterized in that** the housing (1) of the airbag device, in particular, if appropriate, the module housing, is connected at its open end to the gas generator (11, 12) to form a unit.

11. Airbag device according to Claim 9 or 10, **characterized in that** the housing (1) of the airbag device, in particular, if appropriate, the module housing, is connected at its open end to the gas generator (11, 12) by clinching, screwing, riveting, etc.

12. Airbag device according to one of the preceding claims, **characterized in that** the housing (1) of the airbag device, in particular, if appropriate, the module housing, is designed in such a manner that it serves as a receiving carrier for the mechanical auxiliary means which in particular include deflecting rollers (6) and pull cables (7), levers or corresponding, other transmission means.

13. Airbag device according to one of the preceding claims, **characterized in that** the housing (1) of the airbag device, in particular, if appropriate, the module housing, is designed for receiving and/or securing the airbag.

14. Airbag device according to one of the preceding claims, **characterized in that** the housing (1) of the airbag device, in particular, if appropriate, the module housing, is designed for fastening or receiving a blasting channel and/or a flap guide and/or a flap receptacle.

15. Airbag device according to one of the preceding claims, **characterized in that** the housing (1) of the airbag device, in particular, if appropriate, the module housing, in particular has integrally formed tabs on/in which the mechanical auxiliary means, in particular pull cables (7) contained therein, are guided.

16. Airbag device according to Claim 15, **characterized in that** the guide of the cables (7) is closed in a pressure-tight manner by a sealing means (14), plastically or in the form of a strip.

17. Airbag device according to one of the preceding claims, **characterized in that** the housing (1) of the airbag device, in particular, if appropriate, the module housing, forms a guide for the pressure pad (2).

18. Airbag device according to one of the preceding claims, **characterized in that** the overflow openings (15) which open up a gas supply line to the airbag after the covering devices are retracted are included in the pressure pad (2).

## Revendications

1. Dispositif d'airbag, avec au moins un élément de recouvrement, derrière lequel est logé dans une position fermée un sac de gaz se déployant en étant rempli de gaz, et qui peut être déplacé au moyen d'une commande de la position fermée dans une position ouverte afin de permettre le déploiement du sac de gaz, sachant qu'il est prévu un pot de pression (2) mobile en translation, associé à des équipements de production de gaz (11, 12), dont le déplacement engendre, via des moyens auxiliaires mécaniques (6, 7, 17) qui font partie de la commande, le déplacement de l'élément de recouvrement de la position fermée dans la position ouverte,
**caractérisé en ce que** les équipements de production de gaz présentent un générateur de gaz (11) pour produire une pression de gaz afin de déplacer le pot de pression (2) disposé à translation sur le générateur de gaz (11, 12) et afin de remplir le sac de gaz,
**en ce que** sont prévues des ouvertures de trop-plein (15) qui, une fois les éléments de recouvrement rentrés, libèrent une conduite d'apport de gaz menant du pot de pression (2) au sac de gaz,
et **en ce que** le boîtier (1) du dispositif d'airbag est tubulaire, est assemblé au générateur de gaz (11) et entoure en étanchéité le pot de pression (2).

2. Dispositif d'airbag selon la revendication 1, **caractérisé en ce que** le dispositif d'airbag est réalisé sous forme de module d'airbag, qui contient le pot de pression (2), les moyens auxiliaires mécaniques (6, 7, 17) et l'élément de recouvrement, et à l'intérieur duquel l'élément de recouvrement est rentré par le déplacement du pot de pression (2) lors de la libération du dispositif d'airbag.

3. Dispositif d'airbag selon la revendication 1 ou 2, **caractérisé en ce qu'**un film glissant (18) est prévu entre le pot de pression (2) et le boîtier tubulaire (1) du dispositif d'airbag en vue d'un guidage aisé du pot de pression (2).

4. Dispositif d'airbag selon la revendication 3, **caractérisé en ce que** le film glissant (18) est conçu pour guider le pot de pression (2) sans coincement.

5. Dispositif d'airbag selon la revendication 3 ou 4, **caractérisé en ce que** le film glissant (18) est prévu pour l'étanchement.

6. Dispositif d'airbag selon l'une quelconque des revendications 3 à 5, **caractérisé en ce que** le film glissant (18) est réalisé, quant à sa forme et/ou son matériau, de telle sorte que la pression du gaz et/ou la température du gaz engendre une « fusion » du film et notamment de sa lèvre antérieure, et qu'on obtient ainsi un mastic d'étanchéité plastique solide.

7. Dispositif d'airbag selon l'une quelconque des revendications 3 à 6, **caractérisé en ce que** le boîtier du dispositif d'airbag est un boîtier de module (1), et **en ce que** le film glissant (18) est prévu entre le pot de pression (2) et le boîtier de module (1).

8. Dispositif d'airbag selon l'une quelconque des revendications précédentes, **caractérisé en ce que** le boîtier (1) du dispositif d'airbag, notamment le cas échéant le boîtier de module, est conjointement conçu pour absorber la sollicitation due à la pression de gaz destinée à déplacer le pot de pression (2) et à remplir le sac de gaz.

9. Dispositif d'airbag selon l'une quelconque des revendications précédentes, **caractérisé en ce que** le boîtier (1) du dispositif d'airbag, notamment le cas échéant le boîtier de module, présente une extrémité ouverte par laquelle il est assemblé en étanchéité à un générateur de gaz (11, 12) pour produire la pression de gaz destinée à déplacer le pot de pression (2) et à remplir le sac de gaz.

10. Dispositif d'airbag selon la revendication 9, **caractérisé en ce que** le boîtier (1) du dispositif d'airbag, notamment le cas échéant le boîtier de module, est assemblé par son extrémité ouverte au générateur de gaz (11, 12) en un ensemble.

11. Dispositif d'airbag selon la revendication 9 ou 10, **caractérisé en ce que** le boîtier (1) du dispositif d'airbag, notamment le cas échéant le boîtier de module, est assemblé par son extrémité ouverte au générateur de gaz (11, 12) par rivage, vissage, rivetage, etc.

12. Dispositif d'airbag selon l'une quelconque des revendications précédentes, **caractérisé en ce que** le boîtier (1) du dispositif d'airbag, notamment le cas échéant le boîtier de module, est conçu de telle sorte qu'il sert de support récepteur pour les moyens auxiliaires mécaniques, qui comprennent notamment des poulies de renvoi (6) et des câbles de traction (7), des leviers ou d'autres moyens de transmission correspondants.

13. Dispositif d'airbag selon l'une quelconque des revendications précédentes, **caractérisé en ce que** le boîtier (1) du dispositif d'airbag, notamment le cas échéant le boîtier de module, est conçu pour recevoir et/ou pour y fixer le sac de gaz.

14. Dispositif d'airbag selon l'une quelconque des revendications précédentes, **caractérisé en ce que** le boîtier (1) du dispositif d'airbag, notamment le cas échéant le boîtier de module, est conçu pour y fixer et/ou pour recevoir un canal d'éjection et/ou un guide de volets et/ou un élément récepteur de volets.

15. Dispositif d'airbag selon l'une quelconque des revendications précédentes, **caractérisé en ce que** le boîtier (1) du dispositif d'airbag, notamment le cas échéant le boîtier de module, présente notamment des pattes formées sur lui, sur/dans lesquelles sont guidés les moyens auxiliaires mécaniques, notamment les câbles de traction (7) qui en font partie.

16. Dispositif d'airbag selon la revendication 15, **caractérisé en ce que** le guide des câbles (7) est fermé en étanchéité à la pression par un moyen d'étanchéité (14), de manière plastique et/ou en tant que baguette.

17. Dispositif d'airbag selon l'une quelconque des revendications précédentes, **caractérisé en ce que** le boîtier (1) du dispositif d'airbag, notamment le cas échéant le boîtier de module, constitue un guide pour le pot de pression (2).

18. Dispositif d'airbag selon l'une quelconque des revendications précédentes, **caractérisé en ce que** les ouvertures de trop-plein (15), qui une fois les éléments de recouvrement rentrés libèrent une conduite d'apport de gaz menant au sac de gaz, sont prévues dans le pot de pression (2).
